# EUROPEAN PATENT APPLICATION

(11) **EP 4 746 106 A1**
(43) Date of publication of application: **20.05.2026**
(21) Application number: 25199750.8
(22) Date of filing: 02.09.2025
(51) Int. Cl.: H01M 10/42, H01M 50/528, H01M 50/572, H01M 50/574, H01M 50/583

(54) **BATTERY PACK**

(30) Priority: 19.11.2024 KR 20240165187
(71) Applicant: SAMSUNG SDI CO., LTD., Yongin-si, Gyeonggi-do 17084 (KR)
(72) Inventor: HAN, Seungyeon, 17084 Yongin-si (KR)
(74) Representative: Marks & Clerk LLP

(57) **Abstract**

A battery pack includes: a battery cell including an electrode assembly having a cell tab; a protection circuit module electrically connected to the cell tab; a connection portion arranged between the battery cell and the protection circuit module, the connection portion including an insulating material and having a notch portion having an inwardly concave shape in a perimeter thereof; and a protection member covering the perimeter of the connection portion.

## Description

### BACKGROUND

### 1. Field

Aspects of embodiments of the present disclosure relate to a battery pack.

### 2. Description of the Related Art

Generally, with the rapid development of the electrical, electronic, communications, and computer industries, the demand for high-performance and high-safety secondary batteries is rapidly increasing. For example, with the trend toward lighter, thinner, and more portable electrical and electronic products, lightweight and compact secondary batteries are in demand.

Further, as environmental pollution, such as air pollution and noise due to the mass use of automobiles, and the need for new forms of energy sources due to the depletion of oil have arisen, the development of electric vehicles has increased, and the development of batteries exhibiting high output and high energy density as a power source for these vehicles is being developed.

In response to such demands, one of the high-performance, next-generation, cutting-edge batteries that has recently received significant attention is secondary batteries. Lithium, used as a positive electrode, is most in the spotlight as an electrode material for high energy density batteries because of its very low density and standard reduction potential.

To mitigate risks, such as overcharging and overcurrent of battery cells in a battery pack of a secondary battery, a protection circuit module (PCM) may be electrically connected to the outside of the battery cells.

If the physical connection between the PCM and a battery cell is weak, poor contact may occur due to shock or vibration, which may lead to a decrease in battery performance or a safety accident.

The above-described information disclosed in the background of the present disclosure is intended to improve understanding of the background of the present disclosure, and therefore, it may include information that does not constitute related (or prior) art.

### SUMMARY

Embodiments of the present disclosure provide a battery pack including a protection circuit module (PCM) and a battery cell that are firmly connected to each other by a protection member and by providing, in one side of a connection portion connecting the battery cell to a protection circuit module, a notch portion forming a space for the protection member to be installed.

The aspects and features of the present disclosure are not limited to those mentioned above, and other aspects and features of the present disclosure that are not mentioned may be understood by the following description.

According to an embodiment of the present disclosure, a battery pack includes a battery cell including an electrode assembly having a cell tab, a protection circuit module electrically connected to the cell tab, a connection portion (which is) arranged between the battery cell and the protection circuit module, having a notch portion having (or of) an inwardly concave shape in a perimeter thereof, and including an insulating material, and a protection member covering the perimeter of the connection portion.

In some embodiments, the notch portion may be spaced (or positioned) apart from a region at where the cell tab is arranged (or where the cell tab is positioned).

In some embodiments, a plurality of notch portions may be (provided) spaced apart from each other in a length direction of the connection portion, and ones of the plurality of notch portions may be positioned symmetrically about (or based on) a longitudinal central axis of the connection portion.

In some embodiments, the cell tab may include a positive electrode tab and a negative electrode tab spaced apart from each other (at a preset interval) along the longitudinal central axis of the connection portion, and at least one of the notch portions may be (located in a region) between the positive electrode tab and the negative electrode tab.

In some embodiments, a depth of the notch portion facing a longitudinal central axis of the connection portion may be (relatively) less than half a width of the connection portion.

In some embodiments, an inner circumferential surface of the notch portion may have a concave shape curved toward the longitudinal central axis of the connection portion.

In some embodiments, a width of the connection portion in one direction may be (relatively) greater than a width of the protection circuit module in the one direction.

In some embodiments, the protection member may extend from an outer region of the notch portion to an inner region of the notch portion.

In some embodiments, one side of the protection member (located) in the inner region of the notch portion may contact (or come into contact with) an inner circumferential surface of the notch portion, the battery cell, and the protection circuit module.

In some embodiments, the protection member may include synthetic resin.

According to another embodiment of the present disclosure, a battery pack includes a battery cell including an electrode assembly having a cell tab, a protection circuit module electrically connected to the cell tab, a plurality of connection portions (arranged) between the battery cell and the protection circuit module, (the plurality of connection portions) including an insulating material, and (being) spaced apart from each other in a length direction of the protection circuit module, and a protection member covering a perimeter of the connection portions.

In some embodiments, a (or at least one) channel portion may be (located or formed) between (adjacent ones of) the plurality of the connection portions, and the protection member may penetrate the channel portion from outside of the connection portions (or the channel portion providing a space through which the protection member penetrates from outside of the connection portions).

In some embodiments, the channel portion may be spaced (or positioned) apart from a region (at) where the cell tab is arranged.

In some embodiments, the cell tab may include a positive electrode tab and a negative electrode tab spaced apart from each other (at a preset interval) along a longitudinal central axis of the connection portion, and the channel portion (or at least one of the channel portions) may be (located) in a region between the positive electrode tab and the negative electrode tab.

In some embodiments, a width of the channel portion in one direction may be (relatively) less than a width of each of the connection portions spaced apart from each other in one direction.

In some embodiments, a notch portion having a depth in a direction away from the channel portion may be (located) in a side portion of the connection portion that faces the channel portion (or of each of the connection portions which faces the channel portion).

In some embodiments, an inner circumferential surface of the notch portion may have a concave curve shape (or the shape of a concave curve) that is curved away from a longitudinal central axis of the channel portion.

In some embodiments, a depth of the notch portion in a direction away from the channel portion may be (relatively) less than a width of the channel portion.

In some embodiments, one side of the protection member in an inner region of the channel portion may contact each (or all) of a side surface of the connection portion facing the channel portion, the battery cell, and the protection circuit module.

In some embodiments, the protection member may include synthetic resin.

At least some of the above and other features of the invention are set out in the claims.

### BRIEF DESCRIPTION OF THE DRAWINGS

The following drawings attached to the present specification illustrate embodiments of the present disclosure and, together with the detailed description of the present disclosure provided below, further describe aspects and features of the technical idea of the present disclosure. Therefore, the present disclosure should not be interpreted as being limited to matters described in such drawings, in which:
FIG. 1 is an exploded perspective view of a battery pack according to an embodiment of the present disclosure;
FIG. 2 is an exploded perspective view of a battery cell illustrated in FIG. 1;
FIG. 3 is an enlarged view of the region "A" in FIG. 1;
FIG. 4 illustrates the battery cell shown in FIG. 3 in a state before a protection circuit module is attached to a connection portion;
FIG. 5 is a plan view of the connection portion illustrated in FIG. 4;
FIG. 6 is an enlarged view of a connection structure of a protection circuit module and a battery cell of a battery pack according to another embodiment of the present disclosure;
FIG. 7 illustrates the battery cell shown in FIG. 6 in a state before the protection circuit module is attached to a connection portion; and
FIG. 8 is a plan view of the connection portion illustrated in FIG. 7.

### DETAILED DESCRIPTION

As the present disclosure allows for various changes and numerous embodiments, example embodiments will be illustrated in the drawings and described, in detail, in the written description. The aspects and features of the present disclosure, and ways to achieve them, will become apparent by referring to embodiments that will be described later, in detail, with reference to the drawings. However, the present disclosure is not limited to the following embodiments but may be embodied in various forms.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Unless there is an explicit description or contradiction of the order of the steps constituting a method according to embodiments of the present disclosure, the steps may be performed in any suitable order. The present disclosure is not necessarily limited to the order in which the above steps are described.

For example, if a particular embodiment is otherwise feasible, a particular process sequence may be performed in a different order than the one described. For example, two processes described sequentially may be performed concurrently or substantially simultaneously or may proceed in the reverse order from that described.

Hereinafter, embodiments of the present disclosure will be described in detail with reference to the attached drawings. When describing with reference to the drawings, identical or corresponding elements are given the same reference numerals and redundant descriptions thereof may be omitted.

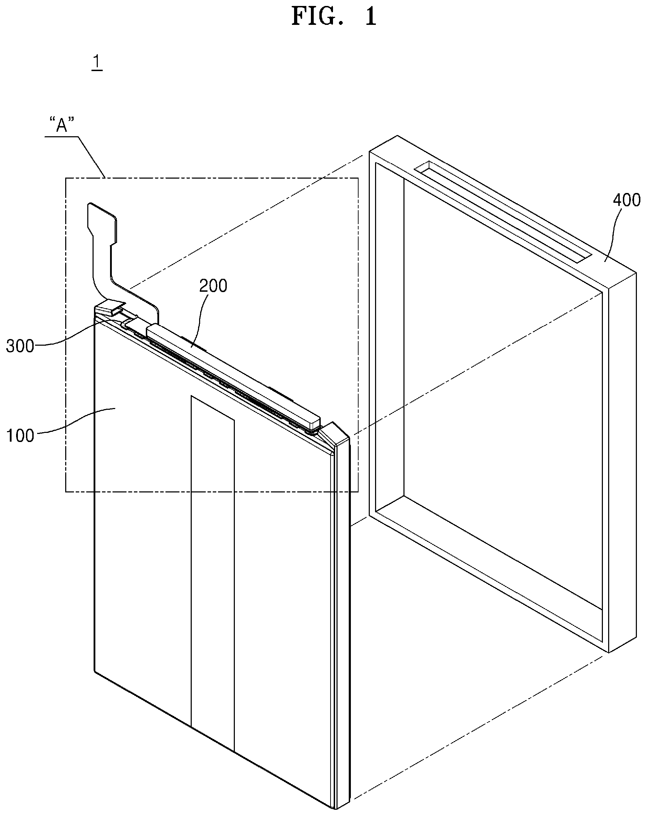

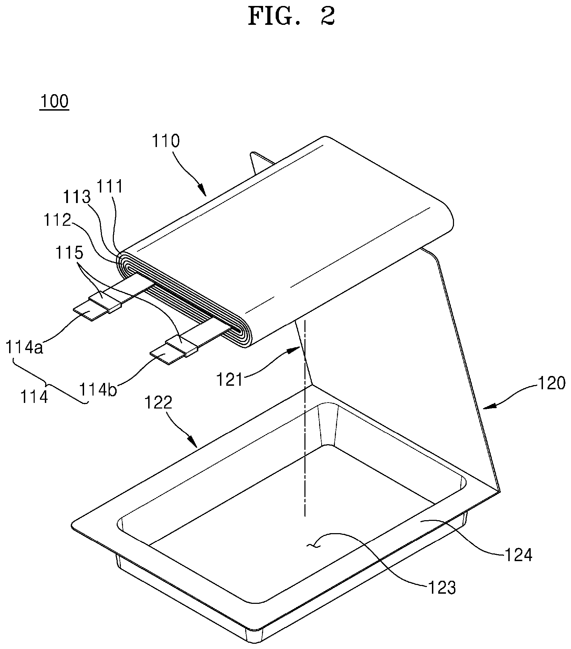

FIG. 1 is an exploded perspective view of a battery pack according to an embodiment of the present disclosure, and FIG. 2 is an exploded perspective view of a battery cell illustrated in FIG. 1.

Referring to FIG. 1, a battery pack 1 according to an embodiment of the present disclosure may include a battery cell 100, a protection circuit module (PCM) 200, a connection portion 300, and a protection member 400.

Referring to FIG. 2, the battery cell 100, according to an embodiment of the present disclosure, may include an electrode assembly 110 and a case 120.

The electrode assembly 110 may be manufactured in the form of a jelly roll by winding a separator 113 arranged between a first electrode plate 111 and a second electrode plate 112. In another embodiment, the electrode assembly 110 may be manufactured in a stack form by stacking the separator 113 between a plurality of first electrode plates 111 and a plurality of second electrode plates 112. Additionally, the electrode assembly 110 may be manufactured by applying both jelly rolls and stacks.

For example, the electrode assembly 110 may be formed by winding or stacking a stack of the first electrode plates 111, the separator 113, and the second electrode plates 112, which are formed in a thin plate shape or film shape. When the electrode assembly 110 is a rolled stack, the rolling axis may be parallel to a length direction of the case 120. Additionally, the electrode assembly 110 may be a stack type rather than a rolled (or wound) type.

The shape of the electrode assembly 110 is not limited in the present disclosure. Additionally, the electrode assembly 110 may be a Z-stack electrode assembly in which a positive electrode plate and a negative electrode plate are inserted on both sides (e.g., opposite sides) of the separator 113 and then bent (or folded) into a Z-stack. In addition, the electrode assembly 110 may be stored inside (e.g., accommodated in) the case 120 by stacking one or more electrode assemblies 110 such that long sides thereof are adjacent to each other, and the number of electrode assemblies 110 is not limited in the present disclosure. The first electrode plate 111 of the electrode assembly 110 may act as a negative electrode, and the second electrode plate 112 may act as a positive electrode. The opposite is also possible.

The first electrode plate 111 may have a first active material-coated portion formed by coating (e.g., intermittently coating) a first active material on a first substrate, which is a sheet-shaped conductive material, and a first uncoated portion, which is a portion of the first substrate that is exposed because the first active material is not coated thereon. The first electrode plate 111 may be a negative electrode plate, and the first active material may include a negative electrode active material including a carbon material, such as crystalline carbon, amorphous carbon, a carbon composite, carbon fiber, or lithium metal or a lithium alloy.

For example, the first electrode plate 111 may be formed by applying a first electrode active material, such as graphite or carbon, to a first electrode current collector plate formed of a metal foil, such as copper, a copper alloy, nickel, or a nickel alloy, and may include a negative electrode tab 114b (e.g., a first uncoated portion), which is a region of the first electrode current collector plate at where the first electrode active material is not applied. The negative electrode tab 114b may be a passage for current flow between the first electrode plate 111 and a first collector (e.g., an external device or circuit). In some embodiments, the negative electrode tab 114b may be formed by cutting the first electrode plate 111 in advance such that the negative electrode tab 114b protrudes to one side when manufacturing the first electrode plate 111 and may protrude further to one side than the separator 113 without separate cutting.

The second electrode plate 112 may have a different polarity from that of the first electrode plate 111 and may have a second active material-coated portion formed by coating (e.g., intermittently coating) a second active material on a second substrate, which is a sheet-shaped conductive material, and a second uncoated portion, which is a portion of the second substrate that is exposed because the second active material is not coated thereon. The second electrode plate 112 may be a positive electrode plate, and the second active material may include a positive electrode active material including lithium, such as LiCoO₂, LiNiO₂, LiMnO₂, LiMn₂O₄, or LiNi_{1-x-y}COₓM_{y}O₂.

The second electrode plate 112 may be formed by applying a second electrode active material, such as a transition metal oxide, to a second electrode current collector plate formed of a metal foil, such as aluminum or an aluminum alloy, and may include a positive electrode tab 114a (e.g., second non-coated portion) which is an area at where the second electrode active material is not applied.

The positive electrode tab 114a may be a passage for current flow between the second electrode plate 112 and a second collector (e.g., an external device or circuit). In some embodiments, the positive electrode tab 114a may be formed by cutting the same in advance to protrude to the other side when manufacturing the second electrode plate 112 and may protrude further to the other side than the separator 113 without separate cutting.

The separator 113 may be between the first electrode plate 111 and the second electrode plate 112 and may insulate the first electrode plate 111 and the second electrode plate 112 from each other while allowing lithium ions to be exchanged between the first electrode plate 111 and the second electrode plate 112. The separator 113 may have a sufficient length to completely insulate between the first electrode plate 111 and the second electrode plate 112 even if the electrode assembly 110 shrinks or expands during a charging and discharging process of the battery pack 1.

A cell tab 114 may be arranged on each of the first electrode plate 111 and the second electrode plate 112 and may protrude to one side. The cell tab 114 may include the positive electrode tab 114a and the negative electrode tab 114b, and the positive electrode tab 114a may be connected to an uncoated portion of the second electrode plate 112, and the negative electrode tab 114b may be connected to an uncoated portion of the first electrode plate 111. The cell tabs 114 may each be electrically connected to first electrode plate 111 and/or second electrode plate 112, and the cell tabs 114 extend to the outside of the electrode assembly 110.

A film portion 115 may be arranged on the cell tab 114, and the film portion 115 may be arranged on one surface of the cell tab 114 or may be arranged to surround (e.g., to extend around a periphery of) the cell tab 114. The film portion 115 may seal the cell tab 114 exposed to the outside of the electrode assembly 110. To prevent a short circuit that would occur if the cell tab 114 contacts a metal layer exposed at an end of a sealing portion 124 of the battery case 120, the film portion 115 may be heat-sealed to the sealing portion 124 so that the cell tab 114 and the sealing portion 124 are tightly coupled to each other.

The case 120 forms the exterior of the battery pack 1 and has the electrode assembly 110 arranged thereinside. The shape and size of the case 120 are not particularly limited, and the case 120 may have a shape and size corresponding to the electrode assembly 110.

For example, the case 120 may have a rectangular shape with an empty interior. In other embodiments, the case 120 may have a polyhedral or cylindrical shape.

The case 120 may include a cover 121 and a lower case 122 and may have an internal space 123 and the sealing portion 124. The lower case 122 has (or forms) the internal space 123 having a dimension greater than that of the electrode assembly 110, and the electrode assembly 110 may be inserted into the internal space 123.

The cover 121 may be arranged to be openable on an upper surface of the lower case 122 to cover the electrode assembly 110 inserted into the internal space 123.

The sealing portion 124 is positioned along an upper edge of the lower case 122. When the electrode assembly 110 is accommodated in the case 120, a portion of the cell tab 114 may be exposed to the outside of the case 120.

The film portion 115 provided on the cell tab 114 may be arranged between the cover 121 and the lower case 122 at a position corresponding to the sealing portion 124.

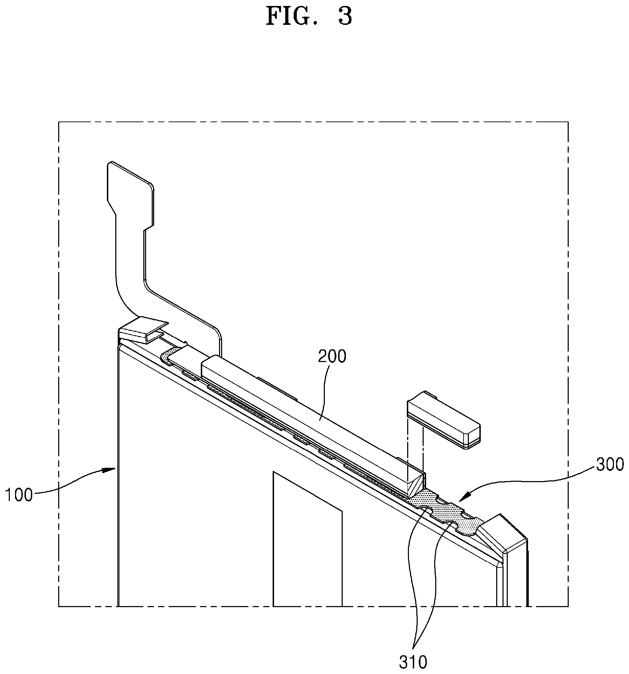

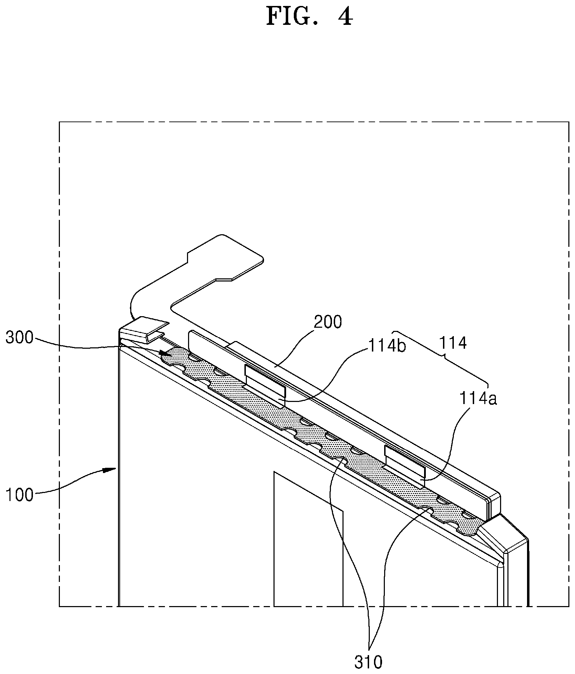

FIG. 3 is an enlarged view of the region A in FIG. 1, and FIG. 4 is a diagram showing a state before a protection circuit module illustrated in FIG. 3 is attached to a connection portion.

Referring to FIG. 3, the protection circuit module (PCM) 200, according to an embodiment of the present disclosure, may protect the battery cell 100 from various risk factors, such as overcharge, overdischarge, overcurrent, and short circuit of the battery cell 100, thereby preventing damage to the battery cell 100 and extending the life of the battery pack 1.

For example, the protection circuit module 200 may include a printed circuit board (PCB) and may further include at least one of a metal oxide semiconductor field-effect transistor (MOSFET), a fuse, a resistor, a capacitor, and a temperature sensor for current control and protection.

The MOSFET of the protection circuit module 200 may control a current flow to the battery cell 100 and may protect the battery cell 100 by blocking (or disconnecting) a circuit when an overcurrent or overcharge condition occurs, and the temperature sensor of the protection circuit module 200 may monitor the temperature of the battery cell 100 in real time and may limit or stop the current flow if overheating occurs.

The protection circuit module 200 may include a microcontroller (MCU), and the microcontroller may process data collected from a sensor, analyze a battery status, and execute a protection operation.

The protection circuit module 200 may be electrically connected to the battery cell 100 and perform a cell balancing function to adjust voltage imbalance between the battery cells 100. The protection circuit module 200 may be connected in parallel or series to other cells within the battery pack 1, thereby monitoring a voltage status of each cell and resolving imbalance between cells.

Accordingly, the protection circuit module 200 may increase or maximize the performance and lifespan of the battery cell 100 or the battery pack 1 through a cell balancing function.

The protection circuit module 200 may be arranged on an upper portion of on a side of the battery cell 100 inside the battery pack 1. The protection circuit module 200 may be arranged inside a housing of the battery pack 1 to be protected from external impact or physical damage and may be combined with (or coupled to) a heat dissipation device for heat management to ensure stable operation even in high-heat environments.

The protection circuit module 200 may be configured independently for each cell module unit and may monitor a cell status of each module individually.

The protection circuit module 200 may communicate with a battery management system (BMS), thereby transmitting a status of the battery cell 100 to a central management system.

The protection circuit module 200 may include a wireless communication function and, thus, may remotely monitor and control a status of the battery pack 1, and the protection circuit module 200 may efficiently manage the status of the battery cell 100 via wireless communication.

Referring to FIG. 4, the protection circuit module 200 may be electrically connected to the cell tab 114. For example, the positive electrode tab 114a and the negative electrode tab 114b may be connected to different regions of the protection circuit module 200, respectively.

The protection circuit module 200 may be connected to the battery cell 100, for example, the protection circuit module 200 may be connected to the battery cell 100 via the connection portion 300.

One surface of the protection circuit module 200, which faces the battery cell 100, may be bonded to one surface of the battery cell 100. For example, the connection portion 300, which is adhesive, may be arranged between the protection circuit module 200 and the battery cell 100, and one surface of the connection portion 300 may be in surface contact with the one surface of the protection circuit module 200, and the other surface of the connection portion 300, which is opposite to the one surface, may be in contact with the one surface of the battery cell 100, and accordingly, the protection circuit module 200 may be positionally fixed to the one surface of the battery cell 100.

The positive electrode tab 114a and the negative electrode tab 114b may be spaced apart from each other in the first direction on one surface of the battery cell 100, and a length of the protection circuit module 200 in the first direction may be relatively shorter than a length of the battery cell 100 in the first direction.

In the present specification, the "first direction" may be interpreted as a direction in which the positive electrode tab 114a and the negative electrode tab 114b are spaced apart from each other or a direction parallel to a longitudinal central axis of the protection circuit module 200.

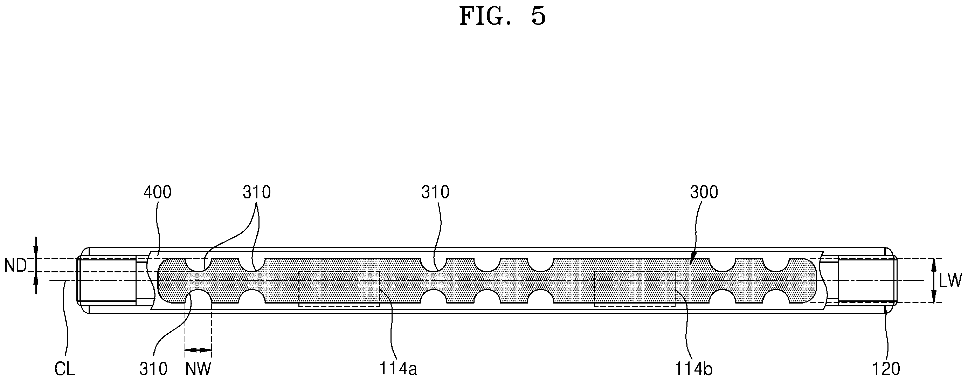

FIG. 5 is a plan view of the connection portion illustrated in FIG. 4.

Referring to FIGS. 3 to 5, the connection portion 300, according to an embodiment of the present disclosure, may connect the battery cell 100 to the protection circuit module 200 and may be arranged between the battery cell 100 and the protection circuit module 200.

The connection portion 300 may include an insulating material. For example, the connection portion 300 may include a material such as polyimide, polyvinyl chloride (PVC), polyester, polyurethane, polytetrafluoroethylene (PTFE, also known as Teflon), silicone, rubber, aramid fiber, polypropylene, polyethylene, fluororesin, polyurea, polycarbonate, or nylon.

Because the connection portion 300 includes an insulating material, a region at where the cell tab 114 of the battery cell 100 is located may be effectively insulated. For example, the connection portion 300 may prevent an electrical short circuit that may occur in the cell tab 114, thereby improving electrical stability.

In some embodiments, because the cell tab 114 of the battery cell 100 may experience a high voltage, abnormal electrical contact may be prevented from occurring at the cell tab 114 because the connection portion 300 includes an insulating material, thereby reducing damage to the battery cell 100.

Referring to FIG. 4 and FIG. 5, a notch portion 310 having an inwardly concave shape may be formed in a perimeter of the connection portion 300.

In this specification, the "perimeter" of the connection portion 300 may be interpreted as an edge, a border, or a side portion of the connection portion 300. For example, the perimeter of the connection portion 300 may be interpreted as a side portion or side surface of the perimeter of the connection portion 300 located between one surface of the connection portion 300, which contacts the protection circuit module 200, and one surface of the connection portion 300, which contacts the battery cell 100.

The notch portion 310 may be a region of the perimeter formed in the shape of a concave notch, cut-out, slit, or the like toward the inside of the connection portion 300.

The notch portion 310 may be formed in a concave shape toward the inside of (e.g., toward a center of) the connection portion 300; for example, the notch portion 310 may be formed having a concave shape toward a longitudinal central axis CL of the connection portion 300 in the side portion of the perimeter of the connection portion 300.

Referring to FIGS. 4 and 5, the notch portion 310 may be positioned apart from (e.g., spaced apart from) a region at where the cell tab 114 is positioned. For example, a region of the connection portion 300, corresponding to the region at where the cell tab 114 is positioned, and the notch portion 310 may be spaced apart from each other, and the notch portion 310 may not be positioned in a region of the connection portion 300, which corresponds to the region at where the cell tab 114 is positioned.

The positive electrode tab 114a and the negative electrode tab 114b may be spaced apart from each other by an interval (e.g., a present or regular interval) in a length direction of the connection portion 300, and the positive electrode tab 114a and the negative electrode tab 114b may be in surface contact with different regions of the connection portion 300 that are spaced apart from each other in the length direction of the connection portion 300.

The notch portion 310 may be located in a region between the positive electrode tab 114a and the negative electrode tab 114b. For example, the notch portion 310 may be formed between a region of the connection portion 300 that contacts the positive electrode tab 114a and a region of the connection portion 300 that contacts the negative electrode tab 114b.

The notch portion 310 may be spaced apart from the cell tab 114 by an interval. For example, a distance between the notch portion 310 adjacent to (e.g., directly or most adjacent to) the cell tab 114 and the cell tab 114 may be about 0.3 mm or more or about 0.5 mm or more.

The notch portion 310 may be spaced apart from the positive electrode tab 114a by an interval. For example, a distance between the notch portion 310 adjacent to the positive electrode tab 114a and the positive electrode tab 114a may be about 0.3 mm or more or about 0.5 mm or more.

The notch portion 310 may be spaced apart from the negative electrode tab 114b by an interval. For example, a distance between the notch portion 310 adjacent to the negative electrode tab 114b and the negative electrode tab 114b may be about 0.3 mm or more or about 0.5 mm or more.

A plurality of notch portions 310 may be spaced apart from each other in the length direction of the connection portion 300. For example, the plurality of notch portions 310 may be formed in the perimeter of the connection portion 300, and the plurality of notch portions 310 may be spaced apart from each other in the length direction of the connection portion 300.

For example, a distance between the notch portion 310 closest to the positive electrode tab 114a and the positive electrode tab 114a may be same as a distance between the notch portion 310 closest to the negative electrode tab 114b and the negative electrode tab 114b.

Referring to FIGS. 4 and 5, at least three notch portions 310 may be spaced apart from each other at equal intervals; for example, at least three notch portions 310 may be spaced apart from each other at equal intervals in the length direction of the connection portion 300.

The notch portions 310 may be formed at a position symmetrical with respect to the longitudinal central axis CL of the connection portion 300 on opposite sides of the perimeter of the connection portion 300.

Referring to FIG. 4, the inner circumferential surface of the notch portion 310 may have a concave shape curved toward the longitudinal central axis CL of the connection portion 300. For example, the inner circumferential surface of the notch portion 310 located between one side of the connection portion 300, which contacts the protection circuit module 200, and one side of the connection portion 300, which contacts the battery cell 100, may be formed in a concave shape curved toward the longitudinal central axis CL of the connection portion 300.

The inner circumferential surface of the notch portion 310 may have an arc shape having a radius of curvature (e.g., a preset radius of curvature). For example, the inner circumferential surface of the notch portion 310 may be formed in a semicircle shape.

As an embodiment, the notch portion 310 may have a concave U-shaped notch, a V-shaped notch, or a 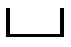 -shaped notch in the length direction of the connection portion 300.

When the battery cell 100 and the protection circuit module 200 are fixed to each other with the connection portion 300 therebetween, the protection member 400 is closely adhered to a region of the battery cell 100 on which the protection circuit module 200 is positioned through a process such as molding, potting, or coating, and the protection member 400 may penetrate into the notch portion 310.

Through this, an area of contact between the connection portion 300 and the protection member 400 and an amount of the protection member 400 penetrating between the protection circuit module 200 and the battery cell 100 increase, and thus, the protection circuit module 200 and the battery cell 100 may be more firmly fixed to each other.

Referring to FIG. 5, a depth ND of the notch portion 310 toward the longitudinal central axis CL of the connection portion 300 may be less than half a width LW of the connection portion 300. For example, the depth ND of the notch portion 310 toward the longitudinal central axis CL of the connection portion 300 may be about 0.1 times to about 0.5 times or about 0.2 times to about 0.4 times the width LW of the connection portion 300.

Referring to FIG. 5, a width NW of the notch portion 310 may be equal to or relatively greater than the depth ND of the notch portion 310. For example, the width NW of the notch portion 310 in the first direction may be equal to or relatively greater than the depth ND of the notch portion 310 in the second direction.

The width NW of the notch portion 310 may be about 1 time to about 3 times or about 1.5 times to about 2 times the depth ND of the notch portion 310.

A length of the connection portion 300 in the first direction may be relatively greater than a length of the protection circuit module 200 in the first direction, and the width LW of the connection portion 300 in the second direction may be relatively greater than a width of the protection circuit module 200 in the second direction.

In the present specification, the "second direction" may be interpreted as a direction that is perpendicular to the first direction and parallel to one surface of the connection portion 300, which is in contact with the protection circuit module 200.

The length of the connection portion 300 in the first direction may be relatively less than a length of one surface of the battery cell 100, which is in contact with the connection portion 300 in the first direction, and the width LW of the connection portion 300 in the second direction may be relatively smaller than the width of one surface of the battery cell 100, which is in contact with the connection portion 300, in the second direction.

For example, the length of the connection portion 300 in the first direction may be greater than the length of the protection circuit module 200 in the first direction and less than the length of the battery cell 100 in the first direction, and the width LW of the connection portion 300 in the second direction may be greater than the width of the protection circuit module 200 in the second direction and less than the width of the battery cell 100 in the second direction.

Referring to FIGS. 1 and 4, the protection member 400 according to an embodiment of the present disclosure may cover the periphery of the connection portion 300.

The protection member 400 may be positioned along the perimeter of a side portion of the battery cell 100, for example, the protection member 400 may cover the side portion of the battery cell 100. The protection member 400 may cover the side portion of the battery cell 100 to protect the battery cell 100 from external impact or physical damage.

The protection member 400 may be attached to the side portion of the battery cell 100 in a molding manner. For example, the protection member 400 may be closely attached to the side portion of the battery cell 100 by a method such as injection molding, compression molding, etc.

However, the present disclosure is not limited thereto, and the protection member 400 may also cover the side portion of the battery cell 100 by potting or coating.

Accordingly, the battery cell 100 may be protected from external impact, scratches, vibration, etc. by the protection member 400, and the protection member 400 may provide an electrical insulation function to prevent undesirable electrical contact between the battery cells 100, thereby preventing a short circuit between the battery cells 100.

The protection member 400 may include an elastic body and/or an insulator. For example, the protection member 400 may include synthetic resin, resin, polyurethane, polypropylene, polyethylene, epoxy, silicone, polyimide, acrylic, fluororesin, rubber, etc.

Referring to FIG. 5, the protection member 400 may extend from an outer region of the notch portion 310 to an inner region of the notch portion 310.

For example, in a process of injecting a molten protection member 400 into the connection portion 300 and then curing the same, the protection member 400 may penetrate from the outer side of the perimeter of the connection portion 300 to the inner region of the notch portion 310 and be cured in the inner region of the notch portion 310.

In some embodiments, one side of the protection member 400, located in the inner region of the notch portion 310, may be cured while being in contact with the inner circumferential surface of the notch portion 310, one surface of the battery cell 100, and one surface of the protection circuit module 200.

Accordingly, because the protection member 400 penetrates into the notch portion 310 and is cured while being in contact with the inner circumferential surface of the notch portion 310, the connection portion 300 and the protection member 400 may be more firmly connected to each.

Through this, the protection circuit module 200 connected to the connection portion 300 and the battery cell 100 connected to the protection member 400 may be firmly connected to each other.

Below, a battery pack according to another embodiment of the present disclosure is described.

The battery pack, according to another embodiment of the present disclosure, has the same configuration, operating principle, and effect as the battery pack 1 as described above, except that a connection portion 300' has a channel portion CH. Thus, a repeated description of the same or substantially similar components and configurations will be omitted.

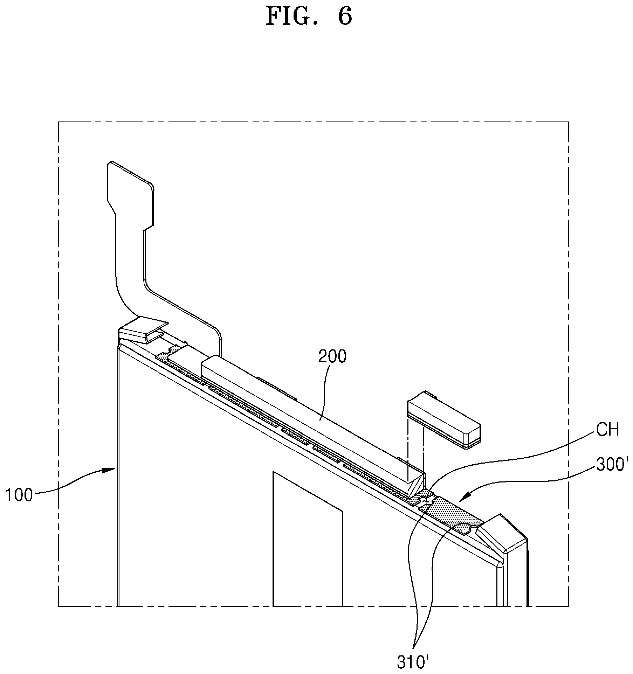

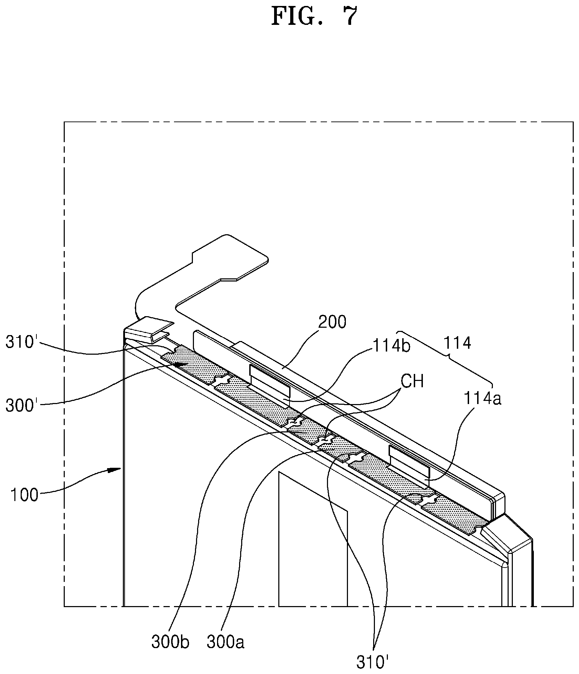

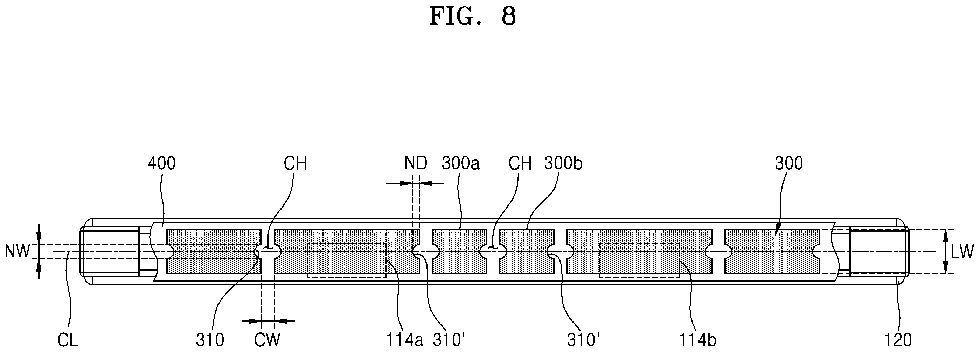

FIG. 6 is an enlarged view of a connection structure of a protection circuit module and a battery cell of a battery pack according to another embodiment of the present disclosure. FIG. 7 is a diagram illustrating the battery cell shown in FIG. 6 in a state before the protection circuit module is attached to a connection portion. FIG. 8 is a plan view of the connection portion illustrated in FIG. 7.

Referring to FIGS. 6 and 7, a battery pack, according to another embodiment of the present disclosure, may include the battery cell 100, the protection circuit module 200, the connection portion 300', and a protection member.

The battery cell 100, the protection circuit module 200, and the protection member of the battery pack, according to another embodiment of the present disclosure, have the same configuration, operating principle, and effect as the battery cell 100, the protection circuit module 200, and the protection member 400 of the battery pack 1 as described above, respectively, and thus, a repeated description thereof is omitted.

Referring to FIGS. 6 to 8, a plurality of connection portions 300' may be provided apart from (e.g., spaced apart from) each other in a length direction of the protection circuit module 200.

Each of the plurality of connection portions 300' is referred to as a connection sheet 300a or 300b, and for convenience of description, the connection sheets 300a and 300b that are adjacent to each other are referred to as a first connection sheet 300a and a second connection sheet 300b. However, this does not mean that the number of connection portions 300' or connection sheets 300a and 300b is limited to two.

The connection portion 300' may be interpreted as collectively referring to a plurality of connection sheets 300a and 300b but is not limited thereto, and the connection portion 300' may also be interpreted as referring to each connection sheet 300a or 300b itself.

Referring to FIGS. 7 and 8, the plurality of connection sheets 300a and 300b may be arranged with an interval (e.g., a preset interval) in the length direction of the protection circuit module 200 between the protection circuit module 200 and the battery cell 100.

Between adjacent ones of the plurality of connection sheets 300a and 300b, a channel portion CH may be formed to provide a space through which the protection member penetrates from the outside of the connection portion 300'.

The channel portion CH may be defined as a space between the plurality of connection sheets 300a and 300b, and in some embodiments, the channel portion CH may be interpreted as a passage or flow path defined by outer surfaces of connection sheets arranged in parallel with each other, one surface of the protection circuit module 200 facing the battery cell 100, and one surface of the battery cell 100 facing a protection circuit module 200.

The channel portion CH may be positioned apart from a region at where the cell tab 114 is located.

The positive electrode tab 114a and the negative electrode tab 114b may be spaced apart from each other by an interval in a length direction of the connection portion 300', and the positive electrode tab 114a and the negative electrode tab 114b may be in surface contact with different regions of the connection portion 300' that are spaced apart from each other in the length direction of the connection portion 300'.

A first direction width CW of the channel portion CH may be about 0.3 mm or more or about 0.5 mm or more.

The channel portion CH may be located in a region between the positive electrode tab 114a and the negative electrode tab 114b. For example, the channel portion CH may be formed between the connection sheets 300a and 300b that are in contact with the positive electrode tab 114a, and the connection sheets 300a and 300b that are in contact with the negative electrode tab 114b.

The channel portion CH may be spaced apart from the cell tab 114 by an interval. For example, a distance between the notch portion 310 adjacent to the cell tab 114 and the cell tab 114 may be about 0.3 mm or more or about 0.5 mm or more.

The channel portion CH may be spaced apart from the positive electrode tab 114a by an interval. For example, a distance between the notch portion 310 adjacent to the positive electrode tab 114a and the positive electrode tab 114a may be about 0.3 mm or more or about 0.5 mm or more.

The channel portion CH may be spaced apart from the negative electrode tab 114b by an interval. For example, a distance between the notch portion 310 adjacent to the negative electrode tab 114b and the negative electrode tab 114b may be about 0.3 mm or more or about 0.5 mm or more.

For example, a distance between the notch portion 310 closest to the positive electrode tab 114a and the positive electrode tab 114a may be same as a distance between the notch portion 310 closest to the negative electrode tab 114b and the negative electrode tab 114b.

A plurality of channel portions CH may be provided to be spaced apart from each other in the length direction of the connection portion 300'. For example, at least three channel portions CH may be spaced apart from each other at equal intervals, for example, at least three channel portions CH may be spaced apart at equal intervals in the length direction of the connection portion 300'.

A longitudinal central axis of the channel portion CH may cross (e.g., may intersect) the longitudinal central axis CL of the connection portion 300'. For example, the longitudinal central axis of the channel portion CH may perpendicularly intersect (or cross) a longitudinal central axis of the connection portion 300'.

The protection member may extend from an outer region of the connection portion 300' to an inner region of the channel portion CH.

For example, in a process of injecting a molten protection member into the connection portion 300' and then curing the same, the protection member may penetrate from the outside of the connection portion 300' to the inner region of the channel portion CH to be cured in the inner region of the channel portion CH.

In some embodiments, one side of the protection member located in the inner region of the channel portion CH may be cured while in contact with each of a side surface of the connection portion 300' facing the channel portion CH, one surface of the battery cell 100, and one surface of the protection circuit module 200.

As a result, because the protection member penetrates into the channel portion CH and is cured while in contact with the inner circumferential surface of the channel portion CH, the connection portion 300' and the protection member may be more firmly connected to each other.

Through this, the protection circuit module 200 connected to the connection portion 300' and the battery cell 100 connected to the protection member may be firmly connected to each other.

Referring to FIGS. 7 and 8, a notch portion 310' having a depth in a direction away from the channel portion CH may be positioned on a side portion of the connection portion 300' facing the channel portion CH.

For example, on a side surface of the connection sheets 300a, 300b, which defines a region of the channel portion CH, a notch portion 310' that is concave may be formed in a direction away from the channel portion CH or toward a center of the respective connection sheet 300a and 300b.

Referring to FIGS. 7 and 8, an inner space of the notch portion 310' may be communicated with (e.g., may be open to or in fluid communication with) the channel portion CH.

The notch portion 310 may be a region of a perimeter formed in the shape of a concave notch, cut-out, slit, or the like toward the inside of the connection portion 300'.

The notch portion 310' may have a concave shape toward the inside of the connection sheets 300a, 300b; for example, the notch portion 310' may have a concave shape in a direction away from the channel portion CH or toward a center of the respective connection sheet 300a, 300b.

The notch portion 310' may be positioned on the longitudinal central axis CL of the connection portion 300', and the longitudinal central axis CL of the connection portion 300' may pass through a region where the notch portion 310' is located.

For example, a plurality of notch portions 310' may be formed in the connection portion 300', and the longitudinal central axis CL of the connection portion 300' may pass through all regions where the plurality of notch portions 310' are located.

An inner circumferential surface of the notch portion 310' may have an arc shape having a radius of curvature. For example, the inner circumferential surface of the notch portion 310' may be formed in a semicircle shape.

In various embodiments, the notch portion 310' may be a concave U-shaped notch, a V-shaped notch, or a 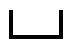 -shaped notch in the direction away from the channel portion CH or toward the center of the respective connection sheet 300a, 300b.

A depth ND of the notch portion 310' in the direction away from the channel portion CH may be relatively smaller than the first direction width CW of the channel portion CH.

The width NW of the notch portion 310' in the second direction may be about 0.1 time to about 0.8 times or about 0.2 times to about 0.5 times the width LW of the connection portion 300' in the second direction.

Thus, when the battery cell 100 and the protection circuit module 200 are fixed to each other with the connection portion 300' therebetween, the protection member is closely adhered to a region of the battery cell 100 on which the protection circuit module 200 is positioned through a process, such as molding, potting, or coating, and the protection member may penetrate into the channel portion CH and into the notch portion 310'.

An amount of the protection member penetrating between the connection portion 300' and a contact area between the protection member and the protection circuit module 200 and the battery cell 100 increases, and thus, the protection circuit module 200 and the battery cell 100 may be firmly fixed to each other.

The battery pack 1, according to embodiments of the present disclosure, includes the connection portion 300' having, in one side thereof, the notch portion 310' or the channel portion CH, which provides a space for a protection member to be installed, the connection portion 300' connecting the battery cell 100 to the protection circuit module 200, so that the protection circuit module 200 and the battery cell 100 may be firmly connected to each other by the protection member.

Each of the embodiments described above may be implemented independently or the structure of each embodiment may be applied in combination with other embodiments.

Although the present disclosure has been described with reference to the embodiments illustrated in the drawings, these are merely examples, and those skilled in the art will understand that various modifications and equivalent other embodiments may be made therefrom. Therefore, the technical protection scope of the present disclosure should be determined by the technical idea of the appended claims and their equivalents.

A battery pack, according to embodiments of the present disclosure, has a connection portion having, in one side thereof, a notch portion that provides a space for a protection member to be installed, the connection portion connecting a battery cell to a protection circuit module, and thus, the protection circuit module and the battery cell may be firmly connected to each other by the protection member.

However, the aspects and features of the present disclosure are not limited to those described above, and other aspects and features not mentioned will be clearly understood by those skilled in the art from the description of the present disclosure described below.

## Claims

1. A battery pack comprising:
a battery cell comprising an electrode assembly having a cell tab;
a protection circuit module electrically connected to the cell tab;
a connection portion arranged between the battery cell and the protection circuit module, the connection portion comprises an insulating material and having a notch portion having an inwardly concave shape in a perimeter thereof; and
a protection member covering the perimeter of the connection portion.

2. The battery pack as claimed in claim 1, (A) wherein the notch portion is spaced apart from a region at where the cell tab is arranged
and/or
(B) wherein a width of the connection portion in one direction is greater than a width of the protection circuit module in the one direction;
And/or
(C) wherein the protection member includes synthetic resin.

3. The battery pack as claimed in claim 2, wherein a plurality of notch portions are spaced apart from each other in a length direction of the connection portion, and
wherein the plurality of notch portions are positioned symmetrically about a longitudinal central axis of the connection portion.

4. The battery pack as claimed in claim 3, wherein the cell tab comprises a positive electrode tab and a negative electrode tab spaced apart from each other along the longitudinal central axis of the connection portion, and
wherein at least one of the notch portions is between the positive electrode tab and the negative electrode tab.

5. The battery pack as claimed in any of claims 2 to 4, wherein a depth of the notch portion facing a longitudinal central axis of the connection portion is less than half a width of the connection portion.

6. The battery pack as claimed in claim 5, wherein an inner circumferential surface of the notch portion has a concave shape curved toward the longitudinal central axis of the connection portion.

7. The battery pack as claimed in any of claims 2 to 6, wherein the protection member extends from an outer region of the notch portion to an inner region of the notch portion.

8. A battery pack comprising:
a battery cell comprising an electrode assembly having a cell tab;
a protection circuit module electrically connected to the cell tab;
a plurality of connection portions between the battery cell and the protection circuit module, the plurality of connection portions comprising an insulating material and being spaced apart from each other in a length direction of the protection circuit module; and
a protection member covering a perimeter of the connection portions.

9. The battery pack as claimed in claim 8, (A) wherein a channel portion is formed between adjacent ones of the plurality of the connection portions, and
wherein the protection member penetrates the channel portion from outside of the connection portions;
and/or
(B) wherein the protection member includes synthetic resin.

10. The battery pack as claimed in claim 9, (A) wherein the channel portion is spaced apart from a region at where the cell tab is arranged;
and/or wherein one side of the protection member in an inner region of the channel portion may contact each of a side surface of the connection portion facing the channel portion, the battery cell, and the protection circuit module.

11. The battery pack as claimed in claim 10, wherein the cell tab comprises a positive electrode tab and a negative electrode tab spaced apart from each other along a longitudinal central axis of the connection portions, and
wherein the channel portion is in a region between the positive electrode tab and the negative electrode tab.

12. The battery pack as claimed in claim 11, wherein a width of the channel portion in one direction is less than a width of each of the connection portions spaced apart from each other in one direction.

13. The battery pack as claimed in any of claims 9 to 12, wherein a notch portion having a depth in a direction away from the channel portion is in a side portion of each of the connection portions facing the channel portion.

14. The battery pack as claimed in claim 13, wherein an inner circumferential surface of the notch portion has a concave curve shape that is curved away from a longitudinal central axis of the channel portion.

15. The battery pack as claimed in claim 13 or claim 14, wherein a depth of the notch portion in a direction away from the channel portion is less than a width of the channel portion.
